# EUROPÄISCHE PATENTSCHRIFT

(11) **EP 0 668 462 B1**
(45) Veröffentlichungstag und Bekanntmachung des Hinweises auf die Patenterteilung: **28.05.1997**
(21) Anmeldenummer: 95100401.9
(22) Anmeldetag: 13.01.1995
(51) Int. Cl.: F16K 1/22, F16K 31/50

(54) **Rohrleitungsarmatur**
Valve
Robinet

(30) Priorität: 19.02.1994 DE 9402731 U
(43) Veröffentlichungstag der Anmeldung: 23.08.1995
(73) Patentinhaber: Bopp & Reuther Armaturen GmbH, D-68305 Mannheim (DE)
(72) Erfinder: Ibanez, José-Manuel Dipl.-Ing., 69239 Neckarsteinach (DE)
(74) Vertreter: Lasch, Hartmut Dipl.-Ing.

(56) Entgegenhaltungen:
- DE-A- 2 521 942
- DE-A- 2 854 331
- DE-C- 867 771
- DE-C- 913 488

## Beschreibung

Die Erfindung betrifft eine Rohrleitungsarmatur mit einer in der Leitung um eine senkrecht zu dieser verlaufenden Achse schwenkbaren Klappe, die mittels eines Antriebsglieds über ein dessen Drehbewegung in eine Schwenkbewegung umsetzendes Getriebe angetrieben ist, das ein verschieblich, aber drehfest gelagertes Zwischenglied aufweist, welches über ein Gewinde mit dem Antriebsglied und über eine axialfreie Drehverbindung mit einem drehbar, aber axialfest im Gehäuse gelagerten und mit der Klappe verbundenen Abtriebsglied in Eingriff steht.

Rohrleitungsarmaturen der vorgenannten Art dienen als Absperrorgane in Leitungssystemen. Absperrorgane weisen als Verschlußorgan entweder in der Leitung schwenkbar gela- gerte Klappen oder radial in die Leitung bewegliche Schieber auf. Der Anwendungsbereich von Armaturen mit Klappe oder Schieber wird im wesentlichen durch die Baugröße und den konstruktiven Bauaufwand für die notwendigen Getriebe der Absperrorgane bestimmt. Als Antrieb für einen Schieber findet in der Regel ein einfacher Linearantrieb, beispielsweise ein Spindeltrieb Verwendung, mittels dessen der Schieber in radialer Richtung in den Rohrleitungsquerschnitt eingefahren bzw. aus diesem herausgefahren werden kann. Bei einer Klappe ist es notwendig, die Bewegung der Spindel in eine Schwenkbewegung der Klappe umzusetzen, wozu üblicherweise relativ aufwendige Getriebe mit großer Bauhöhe notwendig sind, die darüber hinaus teuer sind. Rohrleitungsarmaturen mit einer Klappe finden deshalb fast ausschließlich bei Rohrleitungen mit großen Nennweiten Verwendung, da das Getriebe bei kleineren Nennweiten einen zu hohen Anteil an den Gesamtkosten des Absperrorgans ausmachen würde. So werden Klappen in der Regel bei Nennweiten größer NW150 und Schieber bei Nennweiten kleiner NW300 eingesetzt.

Bei der eingangs genannten Rohrleitungsarmatur mit Klappe (DE 25 21 942 A1) wird das Drehmoment am Handrad der Armatur mittels eines zwischengeschalteten Getriebes in eine Schwenkbewegung der Klappe umgesetzt. Das Getriebe umfaßt ein Zwischenglied in Form einer Schiebehülse mit Außengewinde auf. Die Schiebehülse ist auf einem Teil seiner axialen Länge über eine Paßfeder am Gehäuse der Rohrleitungsarmatur verschieblich, jedoch drehfest gelagert. Das Handrad ist an seinem unteren Ende mit einem glockenartigen Antriebsglied versehen, das die Schiebehülse übergreift und drehbar, jedoch axialfest an seiner Außenseite in einem Gehäuseansatz gelagert ist. Das glockenartige Antriebsglied weist ein Innengewinde auf, das mit dem Außengewinde der Schiebehülse zusammenwirkt. Ein Drehmoment am Handrad führt aufgrund der drehfesten Lagerung der Schiebehülse zu deren axialer Verlagerung. Die Schiebehülse weist weiterhin ein Innengewinde auf, das mit einem Außengewinde an der einer die Klappe lagernden Welle zusammenwirkt. Die Welle ist drehbar, jedoch unverschieblich gelagert. Eine axiale Verschiebung der Schiebehülse führt somit zu einer Drehung der Welle und damit der Klappe, wodurch diese wahlweise in die Offen- oder Schließstellung bringbar ist.

Zwar ist auf diese Weise ein kompakter Getriebeaufbau erreicht, jedoch treten Probleme bei der Lagerstabilität auf. Aufgrund der Druckdifferenz in der Rohrleitung auf beiden Seiten der Klappe können auf diese und somit die Welle relativ große Querkräfte wirken. Dies kann zu einem Ausweichen der Welle aus ihrer axialen Lage, also zum Verkippen führen. Diese Kippkräfte wirken auf das Getriebe, dessen Teile folglich hohen Belastungen ausgesetzt sind. Auch ist das Getriebe einem erhöhten Verschleiß ausgesetzt.

Der Erfindung liegt die Aufgabe zugrunde, eine Rohrleitungsarmatur der eingangs genannten Art so auszubilden, daß bei einer hohen Lagerstabilität eine kompakte Bauweise möglich ist.

Diese Aufgabe wird erfindungsgemäß dadurch gelöst, daß das Antriebsglied eine selbsthemmende Spindel und das Zwischenglied eine Spindelmutter ist, die das Abtriebsglied koaxial umgibt, und daß die Spindel mit ihrem inneren Ende in dem Abtriebsglied gelagert ist.

Die Verwendung einer Spindel als Antriebsglied und der koaxialen Anordnung von Spindelmutter und Abtriebsglied gibt die Möglichkeit, das innere bzw. untere Ende der Spindel direkt bis an die Stirnseite des Abtriebsgliedes heranzuführen. Indem die Spindel erfindungsgemäß mit ihrem inneren Ende in dem Antriebsglied gelagert ist, ist eine Abstützung zwischen der Spindel und dem Abtriebsglied erreicht. Das Abtriebsglied ist somit sowohl in herkömmlicher Weise im Gehäuse der Rohrleitungsarmatur als auch an der Spindel gelagert bzw. abgestützt. Aufgrund dieser doppelten radialen Lagerung auf einer kurzen axialen Länge kann ein Verkippen des Abtriebsgliedes weitgehend vermieden werden. Durch die koaxiale Anordnung der Spindelmutter nicht nur zur Spindel, sondern auch zum Abtriebsglied, ergibt sich in axialer Richtung eine niedrige Bauhöhe.

Das Zwischenglied ist als Spindelmutter ausgebildet, die die Spindel glockenförmig überragt und das Abtriebsglied zumindest bereichsweise, vorzugsweise in der Schließstellung vollständig umgreift. In bevorzugter Ausführung ist vorgesehen, daß die Spindelmutter eine zur Spindel koaxiale, ringförmige Eindrehung und das Abtriebsglied einen in diese eingreifenden hülsenförmigen Ansatz aufweist. Bei dieser Ausführungsform sind das Abtriebsglied und die Spindelmutter axial ineinander "verschachelt", was zur Erzielung einer kurzen und schmalen Bauhöhe und zu einer günstigen Drehmomentübertragung auf kleinem Radius beiträgt. Durch unterschiedliche Steigung des Gewindes zwischen Spindel und Spindelmutter einerseits und der axialfreien Drehverbindung zwischen dieser und dem Abtriebsglied läßt sich eine Übersetzung verwirklichen. Die axialfreie Drehverbindung ist vorzugsweise von einer Schrägverzahnung oder nach Art einer Paßfederverbindung gebildet.

Eine Drehung der Spindel mittels des Handrades oder eines Antriebs wirkt über das Gewinde auf die Spindelmutter. Da diese jedoch drehfest gelagert ist, wird sie axial verschoben. Die Verschiebung der Spindelmutter wirkt über die Schrägverzahnung auf das Abtriebsglied, das drehbar, jedoch axialfest gehalten ist, wodurch die Klappe wahlweise geöffnet oder geschlossen werden kann.

In vorteilhafter Weiterbildung ist vorgesehen, daß die Schrägverzahnung an der Außenseite des Abtriebsgliedes sich bis über deren hülsenförmigen Ansatz erstreckt. Damit kann ein großer Teil der gesamten Hubhöhe innerhalb der axialen Länge der Spindelmutter verwirklicht werden. Dies gibt die Möglichkeit, daß sich die Schrägverzahnung am Abtriebsglied über eine axiale Länge erstreckt, die etwa doppelt so groß ist wie die axiale Erstreckung der Schrägverzahnung an der Spindelmutter, und ferner der Bereich der Verzahnung, der sich auf dem hülsenförmigen Ansatz des Abtriebsgliedes befindet, koaxial zum Gewinde von Spindel und Spindelmutter angeordnet ist.

Für die Ausgestaltung der Lagerung zwischen der Spindel und dem Abtriebsglied hat es sich als vorteilhaft erwiesen, wenn die Spindel an ihrem inneren Ende einen Zapfen aufweist, der in einer Axialbohrung des Abtriebsglieds gelagert ist. Dies kann unter entsprechender Passung oder über Lagerbuchsen geschehen.

Um die Spindelmutter drehfest, jedoch verschieblich zu lagern, ist vorgesehen, daß sie an achsparallelen Führungen im Gehäuse geführt ist, die in bevorzugter Ausgestaltung als Rippen oder Nuten ausgebildet sind, während die Spindelmutter dementsprechend achsparallele Führungsnuten oder -leisten aufweist.

Bei Drehung der Spindel mittels eines Handrades sollte deutlich festzustellen sein, wenn die Klappe ihre beiden Endstellungen, d.h. ihre Öffnungsstellung bzw. ihre Schließstellung erreicht hat, und sollte die Klappe gegen Überdrehen gesichert sein, um ihre Dichtfunktion nicht zu beeinträchtigen. In Weiterbildung der Erfindung ist deshalb vorgesehen, daß der Spindelmutter Anschläge für die Schließ- und Öffnungsstellung der Klappe zugeordnet sind. Diese Anschläge können an der Spindel selbst, beispielsweise in Form eines Bundes oder Anschlagrings, ausgebildet sein.

Da die Spindel und das Abtriebsglied erfindungsgemäß direkt aneinander gelagert sind, kann dies zur Ableitung von gegebenenfalls auftretenden Axialkräften genutzt werden, ohne daß diese auf die Dreh- und Schubverbindungen des Getriebes wirken. Zur Einleitung der Axialkräfte von der Spindel bzw. dem Abtriebsglied in das Gehäuse können entsprechende Anlaufscheiben vorgesehen sein.

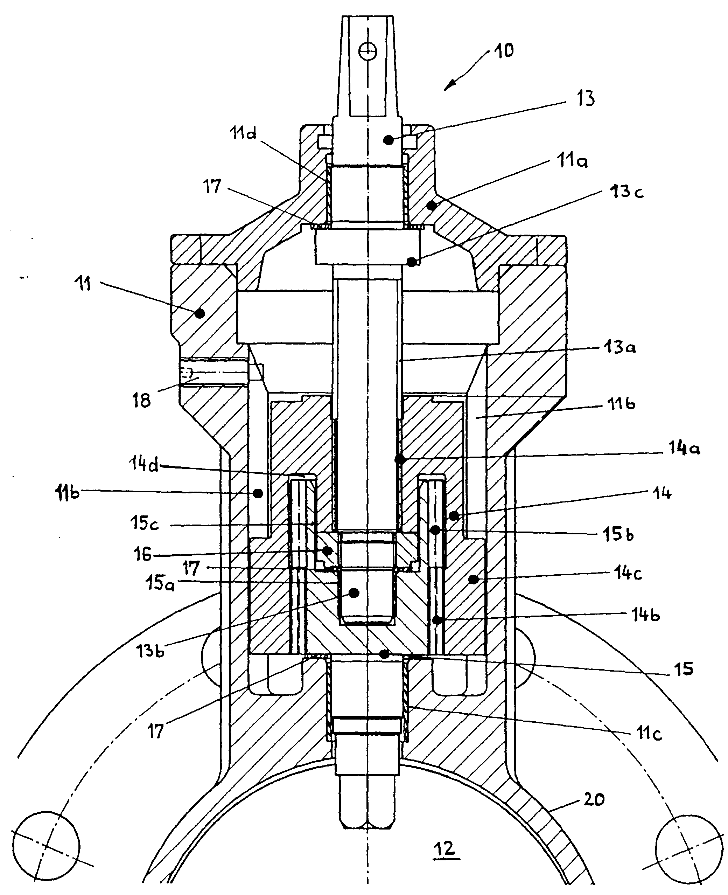

Weitere Einzelheiten und Merkmale der Erfindung sind aus der folgenden Beschreibung eines Ausführungsbeispiels unter Bezugnahme auf die Zeichnung ersichtlich, die einen Querschnitt durch eine Rohrleitungsarmatur in der Schließstellung der Klappe zeigt.

Die Armatur 10 weist ein Gehäuse 11 auf, das als radialer Stutzen an das Rohr 20 mit an gegenüberliegenden Stirnseiten angeordneten Flanschen angeformt ist. Das Gehäuse 11 ist auf seiner Oberseite mit einem Gehäusedeckel 11a verschlossen.

In dem Rohr 20 ist eine nur angedeutete Klappe 12 angeordnet, die an einer Mitnehmerwelle 15 angebracht ist. Die Mitnehmerwelle 15 durchgreift ein Gehäuselager 11c und erstreckt sich in das Gehäuse 11. Sie weist auf ihrer Außenseite ein Gewinde 15b auf. An ihrer dem Gehäuse zugewandten Stirnseite ist die Mitnehmerwelle 15 mit einer Axialbohrung 15a versehen, die als Lagerbohrung einen Zapfen 13b am unteren Ende einer Spindel 13 aufnimmt und deren Drehlager bildet. Die Spindel 13 ist ferner an ihrem oberen Ende in einem Lager 11d im Gehäusedeckel 11a gelagert und weist an ihrem äußeren Ende eine Ausbildung zur Anbringung eines Handrades oder eines Antriebs auf. Die Spindel 13 weist ein Außengewinde 13a auf, das mit dem Innengewinde 14a einer Spindelmutter 14 in Eingriff steht. Während die Spindel 13 und die das Abtriebsglied bildende Mitnehmerwelle 15 drehbar, jedoch axial unverschieblich gelagert sind, ist die Spindelmutter 14 entlang der Spindel 13 axial beweglich, jedoch drehfest am Gehäuse 11 geführt. Zu diesem Zwecke weist das Gehäuse 11 achsparallele Führungen in Form von Nuten 11b auf, in die entsprechende Führungsleisten 14c der Spindelmutter 14 eingreifen.

In ihrem unteren Bereich 14c ist die Spindelmutter 14 glockenartig ausgebildet und übergreift das Abtriebsglied, nämlich den oberen Abschnitt der Mitnehmerwelle 15. Zwischen dieser und dem glockenartigen Bereich 14c der Spindelmutter ist eine axialfreie Drehverbindung vorhanden, die vorzugsweise aus einer Art Schrägverzahnung gebildet ist. Diese besteht aus einer Innenverzahnung 14b an der Spindelmutter 14 und einer Außenverzahnung 15b an dem Abtriebsglied bzw. der Mitnehmerwelle 15. Um die notwendige Hubhöhe für einen 90°-Schwenkwinkel der Klappe 12 bei kleinster Bauhöhe zu verwirklichen, ist die Spindelmutter 14 mit einer ringförmigen Eindrehung 14d versehen, in die ein hülsenförmiger Ansatz 15c des Abtriebsgliedes 15 eingreift. Die Spindelmutter 14 ist nur in ihrem unteren Bereich mit der Innenverzahnung 14b versehen, während die Außenverzahnung 15b am Abtriebsglied auch an dem hülsenförmigen Ansatz 15c angeordnet ist.

Ein an der Spindel 13 aufgebrachtes Drehmoment wird über das Gewinde 13a der Spindel und das Gewinde 14a auf die Spindelmutter übertragen. Da die Spindelmutter 14 drehfest geführt ist, wird sie entlang der Spindel 13 axial verschoben. Die axiale Verschiebung der Spindelmutter 14 wiederum wirkt über die Innenverzahnung 14b der Spindelmutter und die Außenverzahnung 15b als Drehmoment auf die Mitnehmerwelle 15 ein. Da diese axialfest ist, führt deren Bewegung zu einer Schwenkbewegung der Klappe 12 in dem Rohr 20. Durch unterschiedliche Steigungen am Gewinde 13a, 14a und an der Schrägverzahnung 14b, 15b läßt sich eine 90°-Schwenkung der Klappe 12 bei kleinstem Drehwinkel bzw. geringster Zahl von Umdrehungen am Handrad erreichen.

Die Spindel 13 weist im oberen Bereich einen Bund 13c auf, der als Axialanschlag für die Spindelmutter 14 in der Offenstellung der Klappe 12 dient. In der anderen Richtung ist ein an der Spindel 13 angebrachter Gewindering 16 wirksam, der den unteren Axialanschlag für die Spindelmutter 14 in der Schließlage der Klappe 12 bildet.

Zwischen dem Bund 13c der Spindel 13 und dem Gehäusedeckel 11a ist eine Anlaufscheibe 17 vorgesehen. Entsprechende Anlaufscheiben 17 sind auch zwischen der Spindel 13 und der Mitnehmerwelle 15 und zwischen dieser und dem Gehäuse 11 vorgesehen. Somit lassen sich Axialkräfte, die auf die Mitnehmerwelle 15 oder die Spindel 13 einwirken, in das Gehäuse 11 ableiten, ohne sie über die Gewinde übertragen zu müssen.

Im oberen Abschnitt des Gehäuses 11 ist eine radial zur Spindel ausgerichtete Bohrung vorgesehen, in die ein Gewindestift 18 eingeschraubt ist. Der Gewindestift 18 dient als Sicherung bei Öffnen des Gehäusedeckels 11a unter Betriebsdruck. Der Gewindestift 18 ist soweit eingeschraubt, daß ein Ausblasen der Spindelmutter 14 und der anderen Getriebeteile verhindert ist.

## Patentansprüche

1. Rohrleitungsarmatur (10) mit einer in der Leitung (20) um eine senkrecht zu dieser verlaufenden Achse schwenkbaren Klappe (12), die mittels eines Antriebsglieds (13) über ein dessen Drehbewegung in eine Schwenkbewegung umsetzendes Getriebe angetrieben ist, das ein verschieblich, aber drehfest gelagertes Zwischenglied (14) aufweist, welches über ein Gewinde (14a) mit dem Antriebsglied (13) und über eine axialfreie Drehverbindung mit einem drehbar, aber axialfest im Gehäuse (11) gelagerten und mit der Klappe verbundenen Abtriebsglied (15) in Eingriff steht, dadurch gekennzeichnet, daß das Antriebsglied eine selbsthemmende Spindel (13) und das Zwischenglied eine Spindelmutter (14) ist, die das Abtriebsglied (15) koaxial umgibt, und daß die Spindel (13) mit ihrem inneren Ende (13b) in dem Abtriebsglied (15) gelagert ist.

2. Rohrleitungsarmatur nach Anspruch 1, dadurch gekennzeichnet, daß die Spindelmutter (14) das untere Ende (13b) der Spindel (13) glockenförmig überragt und in diesem Bereich das Abtriebsglied (15) übergreift.

3. Rohrleitungsarmatur, insbesondere nach Anspruch 1 oder 2, dadurch gekennzeichnet, daß die Spindelmutter (14) eine zur Spindel (13) koaxiale, ringförmige Eindrehung (14d) und das Abtriebsglied (15) einen in diese eingreifenden hülsenförmigen Ansatz (15c) aufweist.

4. Rohrleitungsarmatur nach einem der Ansprüche 1 bis 3, dadurch gekennzeichnet, daß die Spindel (13) an ihrem inneren Ende einen Zapfen (13b) aufweist, der in einer Axialbohrung (15a) des Abtriebsglieds (15) gelagert ist.

5. Rohrleitungsarmatur nach einem der Ansprüche 1 bis 4, dadurch gekennzeichnet, daß das Gewinde (13a, 14a) zwischen Spindel (13) und Spindelmutter (14) und die axialfreie Drehverbindung (14b, 15b) zwischen dieser und dem Abtriebsglied (15) unterschiedliche Steigungen aufweisen.

6. Rohrleitungsarmatur nach Anspruch 4, dadurch gekennzeichnet, daß das Gewinde (13a, 14a) ein Trapezgewinde ist.

7. Rohrleitungsarmatur nach Anspruch 4, dadurch gekennzeichnet, daß die axialfreie Drehverbindung (14b, 15b) zwischen Spindelmutter (14) und Abtriebsglied (15) eine Art Schrägverzahnung ist.

8. Rohrleitungsarmatur nach einem der Ansprüche 1 bis 7, dadurch gekennzeichnet, daß die Schrägverzahnung (14b) an der Innenseite des glockenförmigen Bereichs der Spindelmutter (14) und die Schrägverzahnung (15b) an der Außenseite des Abtriebsgliedes (15) sich bis über deren hülsenförmigen Ansatz (15c) erstreckt.

9. Rohrleitungsarmatur nach einem der Ansprüche 1 bis 8, dadurch gekennzeichnet, daß sich die Schrägverzahnung (15b) am Abtriebsglied (15) über eine axiale Länge erstreckt, die etwa doppelt so groß ist wie die axiale Erstreckung der Schrägverzahnung (14b) an der Spindelmutter (14).

10. Rohrleitungsarmatur nach einem der Ansprüche 1 bis 9, dadurch gekennzeichnet, daß die Spindelmutter (14) an achsparallelen Führungen (11b) im Gehäuse (11) geführt ist.

11. Rohrleitungsarmatur nach Anspruch 10, dadurch gekennzeichnet, daß die achsparallelen Führungen (11b) als Rippen oder Nuten ausgebildet sind und die Spindelmutter (14) dementsprechend achsparallele Führungsnuten oder -leisten aufweist.

12. Rohrleitungsarmatur nach einem der Ansprüche 1 bis 11, dadurch gekennzeichnet, daß die Hubbewegung der Spindelmutter (14) durch Anschläge (13c, 16) für die Schließ- und Öffnungsstellung der Klappe (12) begrenzt ist.

13. Rohrleitungsarmatur nach einem der Ansprüche 1 bis 12, dadurch gekennzeichnet, daß der Anschlag (16) für die Schließstellung der Klappe (12) ein auf der Spindel (13) sitzender und in den glockenförmigen Bereich der Spindelmutter (14) innerhalb des hülsenförmigen Ansatzes (15c) am Abtriebsglied (15) eingreifender Anschlagring ist.

## Claims

1. Pipe fitting (10) with a flap (12) pivotable in the pipe (20) about an axis perpendicular thereto and which by means of a driving member (13) is driven by a gear converting its rotary movement into a pivoting movement and which has a displaceable intermediate member (14) mounted in non-rotary manner and which is in engagement by means of a thread (14a) with the driving member (13) and by means of an axially free rotary connection with a driven member (15), which is rotatable, but mounted in axially fixed manner in the casing (11) and connected to the flap, characterized in that the driving member is a self-locking spindle (13) and the intermediate member a spindle nut (14) coaxially surrounding the driven member (15) and that the inner end (13b) of the spindle (13) is mounted in the driven member (15).

2. Pipe fitting according to claim 1, characterized in that the spindle nut (14) projects in bell-shaped manner over the lower end (13b) of the spindle (13) and projects over the driven member (15) in this area.

3. Pipe fitting, particularly according to claim 1 or 2, characterized in that the spindle nut (14) has a circular recess (14d) coaxial to the spindle (13) and the driven member (15) a sleeve-like lug (15c) engaging therein.

4. Pipe fitting according to one of the claims 1 to 3, characterized in that on its inner end the spindle (13) has a spigot (13b), which is mounted in an axial bore (15a) of the driven member (15).

5. Pipe fitting according to one of the claims 1 to 4, characterized in that the thread (13a, 14a) between the spindle (13) and spindle nut (14) and the axially free rotary connection (14b, 15b) between the latter and the driven member (15) have different pitches.

6. Pipe fitting according to claim 4, characterized in that the thread (13a, 14a) is a trapezoidal thread.

7. Pipe fitting according to claim 4, characterized in that the axial free rotary connection (14b, 15b) between the spindle nut (14) and driven member (15) is a type of helical gearing.

8. Pipe fitting according to one of the claims 1 to 7, characterized in that the helical gearing (14b) on the inside of the bell-shaped area of the spindle nut (14) and the helical gearing (15b) on the outside of the driven member (15) extends beyond the sleeve-like lug (15c) thereof.

9. Pipe fitting according to one of the claims 1 to 8, characterized in that the helical gearing (15b) on the driven member (15) extends over an axial length roughly twice as long as the axial extension of the helical gearing (14b) on the spindle nut (14).

10. Pipe fitting according to one of the claims 1 to 9, characterized in that the spindle nut (14) is guided on axially parallel guides (11b) in the casing (11).

11. Pipe fitting according to claim 10, characterized in that the axially parallel guides (11b) are constructed as ribs or grooves and the spindle nut (14) has corresponding axially parallel guide grooves or ribs.

12. Pipe fitting according to one of the claims 1 to 11, characterized in that the lifting movement of the spindle nut (14) is limited by stops (13c, 16) for the closing and opening position of the flap (12).

13. Pipe fitting according to one of the claims 1 to 12, characterized in that the stop (16) for the closing position of the flap (12) is a stop ring located on the spindle (13) and engaging in the bell-shaped area of the spindle nut (14) within the sleeve-like lug (15c) on the driven member (15).

## Revendications

1. Vanne pour tuyauterie (10) comportant dans la conduite (20) un clapet (12) pivotant autour d'un axe disposé verticalement par rapport à celle-ci, clapet entraîné par un moyen moteur (13) à travers un mécanisme convertissant son mouvement de rotation en un mouvement de pivotement, moyen moteur présentant un élément intermédiaire (14) logé de manière coulissante mais fixe en rotation, en prise avec le moyen moteur (13) par un filet (14a) et avec un élément de sortie (15) logé mobile en rotation mais fixe axialement dans le boîtier (11) par l'intermédiaire d'une liaison tournante libre axialement, caractérisée en ce que le moyen moteur est une broche autobloquante (13) et l'élément intermédiaire un écrou de broche (14) entourant coaxialement l'élément de sortie (15) et en ce que la broche (13) est montée à rotation par son extrémité intérieure (13b) dans l'élément de sortie (15).

2. Vanne pour tuyauterie selon la revendication 1, caractérisée en ce que l'écrou de broche (14) se prolonge en forme de cloche au-delà de l'extrémité inférieure (13b) de la broche (13) et enserre l'élément de sortie dans cette zone.

3. Vanne pour tuyauterie, en particulier selon l'une quelconque des revendications 1 ou 2, caractérisée en ce que l'écrou de broche (14) présente une gorge (14d) annulaire coaxiale à la broche (13) et en ce que l'élément de sortie (15) présente une saillie (15c) tubulaire venant en prise dans cette gorge.

4. Vanne pour tuyauterie selon l'une quelconque des revendications 1 à 3, caractérisée en ce que la broche (13) présente à son extrémité intérieure un tenon (13b) logé dans un évidement axial (15a) de l'élément de sortie (15).

5. Vanne pour tuyauterie selon l'une quelconque des revendications 1 à 4, caractérisée en ce que le filet (13a, 14a) entre la broche (13) et l'écrou de broche (14) et la liaison tournante (14b, 15b) libre axialement entre celle-ci et l'élément de sortie (15) présentent des pas différents.

6. Vanne pour tuyauterie selon la revendication 4, caractérisée en ce que le filet (13a, 14a) est un filet trapézoïdal.

7. Vanne pour tuyauterie selon la revendication 4, caractérisée en ce que la liaison tournante (14b, 15b) libre axialement entre l'écrou de broche (14) et l'élément de sortie (15) est du type à denture hélicoïdale.

8. Vanne pour tuyauterie selon l'une quelconque des revendications 1 à 7, caractérisée en ce que la denture hélicoïdale (14b) s'étend sur la face interne de la zone en forme de cloche de l'écrou de broche (14) et en ce que la denture hélicoïdale (15b) s'étend sur la face externe de l'élément de sortie (15) au-delà de sa saillie (15c) tubulaire.

9. Vanne pour tuyauterie selon l'une quelconque des revendications 1 à 8, caractérisée en ce que la denture hélicoïdale (15b) de l'élément de sortie (15) s'étend sur une longueur axiale d'environ le double de l'étendue axiale de la denture hélicoïdale (14b) de l'écrou de broche (14).

10. Vanne pour tuyauterie selon l'une quelconque des revendications 1 à 9, caractérisée en ce que l'écrou de broche (14) est guidé dans le boîtier (11) sur des glissières (11b) parallèles à l'axe.

11. Vanne pour tuyauterie selon la revendication 10, caractérisée en ce que les glissières (11b) parallèles à l'axe sont conformées en nervures ou en rainures et en ce que l'écrou de broche (14) présente des nervures ou rainures correspondantes de guidage parallèles à l'axe.

12. Vanne pour tuyauterie selon l'une quelconque des revendications 1 à 11, caractérisée en ce que le mouvement de va-et-vient de l'écrou de broche (14) est limité par des butées (13c, 16) pour la position de fermeture ou d'ouverture du clapet (12).

13. Vanne pour tuyauterie selon l'une quelconque des revendications 1 à 12, caractérisée en ce que la butée (16) pour la position de fermeture du clapet (12) est une bague-butée fixée sur la broche (13) et venant en prise dans la zone en forme de cloche de l'écrou de broche (14) à l'intérieur de la saillie tubulaire (15c) de l'élément de sortie.
